# FASCICULE DE BREVET EUROPEEN

(11) **EP 0 944 145 B1**
(45) Date de publication et mention de la délivrance du brevet: **16.08.2006**
(21) Numéro de dépôt: 99410017.0
(22) Date de dépôt: 11.03.1999
(51) Int. Cl.: H02B 1/21

(54) **Installation de distribution basse tension**
Niederspannungsverteiler
Low-voltage electrical distribution installation

(30) Priorité: 19.03.1998 FR 9803629
(43) Date de publication de la demande: 22.09.1999
(73) Titulaire: SCHNEIDER ELECTRIC INDUSTRIES SAS, 92500 Rueil-Malmaison (FR)
(72) Inventeur: Potonniee, Jean-Christophe, 38050 Grenoble Cedex 09 (FR); Buet, Jacques, 38050 Grenoble Cedex 09 (FR); Hector, Gérard, 38050 Grenoble Cedex 09 (FR); Vollet, Philippe, 38050 Grenoble Cedex 09 (FR); Grosset-Janin, Emile, 38050 Grenoble Cedex 09 (FR); Rebesco, Joseph, 38050 Grenoble Cedex 09 (FR)
(74) Mandataire: Ritzenthaler, Jacques

(56) Documents cités:
- EP-A- 0 808 006
- FR-A- 2 562 344

## Description

L'invention est relative à une unité fonctionnelle de départ d'une cellule électrique à basse tension renfermant:
- un jeu de barres vertical multipolaire comprenant des barres conductrices s'étendant de chant dans des plans verticaux parallèles échelonnés le long de la direction transversale entre deux flasques,
- une platine de support et de branchement d'un appareil électrique,
- une grille de protection positionnée à l'avant des barres, ladite grille étant équipée d'orifices,
- et des moyens de connexion électrique de la platine au jeu de barres comprenant un interface de connexion à pinces d'embrochage, intercalé entre la grille de protection et la platine, chaque pince traversant un orifice prédéterminé de la grille pour enfourcher la barre de la phase correspondante.

Les moyens de connexion couramment utilisés sont constitués soit par des câbles de liaison, soit par des étriers de fixation, nécessitant des opérations de raccordement par serrage. Dans le premier cas, les extrémités des câbles comportent des cosses fixées sur les barres au moyen de vis d'assemblage. Dans le deuxième cas, les étriers de fixation sont solidaires des conducteurs de dérivation de la platine, et l'ensemble est ancré directement sur le jeu de barres. Une telle installation est fixe, et ne permet pas l'évolution vers des solutions déconnectables ou débrochables. Une intervention de maintenance sur l'installation nécessite obligatoirement la mise hors tension du jeu de barres, préjudiciable à la continuité de service.

Le document FR-A-2562344 décrit une installation de distribution basse tension comprenant un jeu de barres vertical multipolaire, et une grille métallique de protection munie d'orifices et positionnée à l'avant des barres. Un interface de connexion à pinces d'embrochage est intercalé entre la grille de protection et la platine de support de l'appareillage électrique, chaque pince traversant un orifice prédéterminé de la grille pour enfourcher la barre de la phase correspondante. La première série des pinces d'embrochage est agencée dans un même plan horizontal sur une face de l'interface de connexion. Une deuxième série de contacts femelles est nécessaire sur la face opposée de l'interface de connexion pour réaliser la connexion de l'appareillage électrique au jeu de barres. L'encombrement dans le sens de la profondeur d'un tel interface de connexion est très important, et le montage de l'installation est rallongé à cause du grand nombre de pièces de raccordement.

L'objet de l'invention consiste à réaliser une unité fonctionnelle de départ permettant une réduction du temps de montage et l'intervention sous tension, tout en autorisant l'évolution vers différentes versions fixes ou déconnectables, amovibles et débrochables avec conservation de la hauteur et de la largeur d'installation.

L'unité fonctionnelle selon l'invention est caractérisée en ce que:
- la platine comporte des conducteurs d'amenée de courant coplanaires présentant des longueurs différentes, avec un décalage en hauteur dans la direction d'extension des barres,
- les pinces d'embrochage sont disposées en oblique sur une plaque de l'interface de connexion, avec un décalage correspondant à l'écartement des barres des différentes phases,
- et des moyens de centrage assurent le positionnement de la platine sur la grille de protection pour aligner les extrémités des conducteurs d'amenée de courant de la platine sur les barres selon une direction perpendiculaire à l'interface de connexion.

Selon une caractéristique de l'invention, la mise en place de la platine sur l'interface de connexion provoque l'insertion des extrémités des conducteurs d'amenée de courant dans les pinces d'embrochage à l'opposé des barres.

Selon un mode de réalisation préférentiel, les moyens de centrage comportent au moins un pion de centrage solidaire de l'interface de connexion, et coopérant avec des trous de la grille, et des trous de la platine. Chaque pion de centrage est formé par une tige faisant saillie de part et d'autre de l'interface de connexion, en s'étendant parallèlement aux pinces d'embrochage.

La platine peut être équipée d'une deuxième série de conducteurs de raccordement en liaison avec les bornes aval de l'appareil et coopérant avec des pinces d'embrochage aval portées par une extension de l'interface de connexion. La deuxième série de conducteurs de raccordement est agencée dans un même plan décalé de celui des conducteurs d'amenée de courant le long de la direction d'embrochage des pinces.

D'autres avantages ressortiront plus clairement de la description qui va suivre d'un mode de réalisation de l'invention, donné à titre d'exemple non limitatif et représenté aux dessins annexés dans lesquels :
- la figure 1 est une vue schématique éclatée en perspective d'une unité fonctionnelle selon l'invention ;
- les figures 2 à 5 représentent différentes versions dans la même hauteur d'installation, respectivement la version fixe, la version déconnectable, la version amovible et la version débrochable ;
- la figure 6 est une vue transversale en coupe de l'unité fonctionnelle en version fixe ou déconnectable ;
- la figure 7 est une vue en élévation d'un unité fonctionnelle en version amovible ;
- la figure 8 est une vue en plan de la figure 7 ;
- la figure 9 est une vue en coupe selon la ligne 9-9 de la figure 7 ;
- les figures 10 et 11 sont des vues en perspective arrière et avant de la platine de la figure 8 ;
- la figure 12 montre une vue en perspective de l'unité fonctionnelle de départ intégrée dans l'ossature d'une cellule.

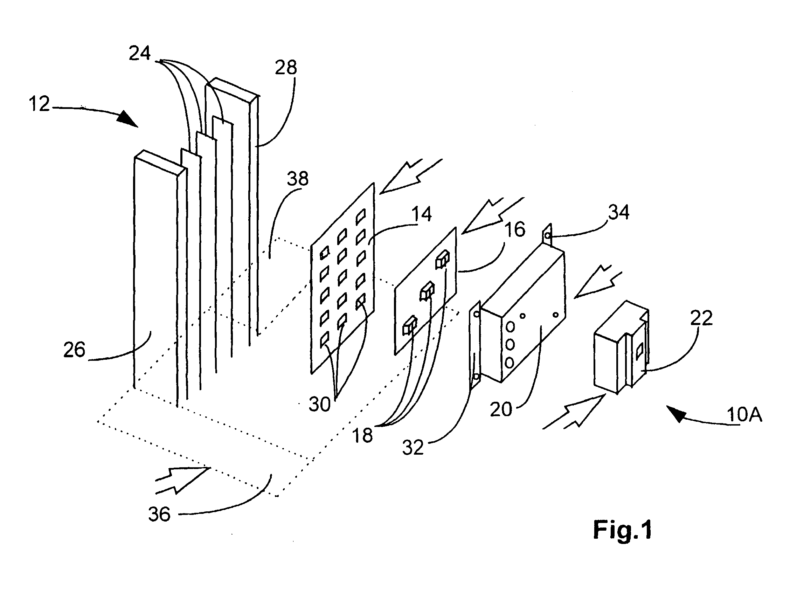

En référence à la figure 1, une unité fonctionnelle de départ 10A d'une cellule électrique multipolaire à basse tension, comporte un jeu de barre 12 vertical, une grille 14 de protection, un interface de connexion 16 à pinces d'embrochage 18, et une platine 20 de support et de branchement d'un appareil électrique 22.

Le jeu de barres 12 est formé par trois ou quatre barres conductrices 24 selon qu'il s'agit d'une installation triphasée sans ou avec neutre. Les barres 24 des différentes phases s'étendent de chant dans les plans verticaux parallèles, en étant insérées transversalement entre deux flasques 26, 28 d'extrémités. La grille 14 de protection est équipée d'une pluralité d'orifices 30 rectangulaires autorisant le passage des pinces d'embrochage 18 lors de la fixation de l'interface de connexion 16 sur le jeu de barres 12. La platine 20 présente une forme parallélépipédique dotée de deux pattes 32, 34 d'assemblage séparées l'une de l'autre par un décalage transversal correspondant à l'écartement des deux flasques 26, 28.

La surface projetée de la zone fonctionnelle de la cellule est représentée en pointillé sur la figure 1. A gauche du flasque 26, se trouve un premier compartiment 36 latéral de logement de la filerie des auxiliaires de l'appareil électrique 22. A droite de l'autre flasque 28 est agencé un deuxième compartiment 38 latéral de raccordement aval des conducteurs de sortie de l'appareil 22.

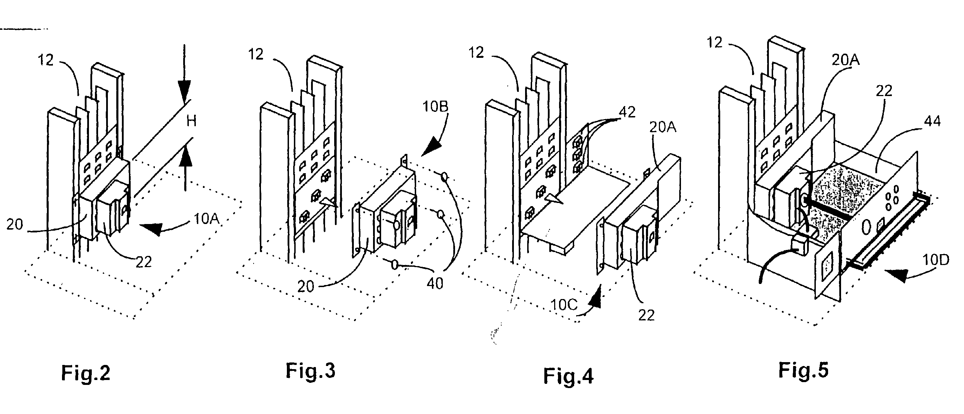

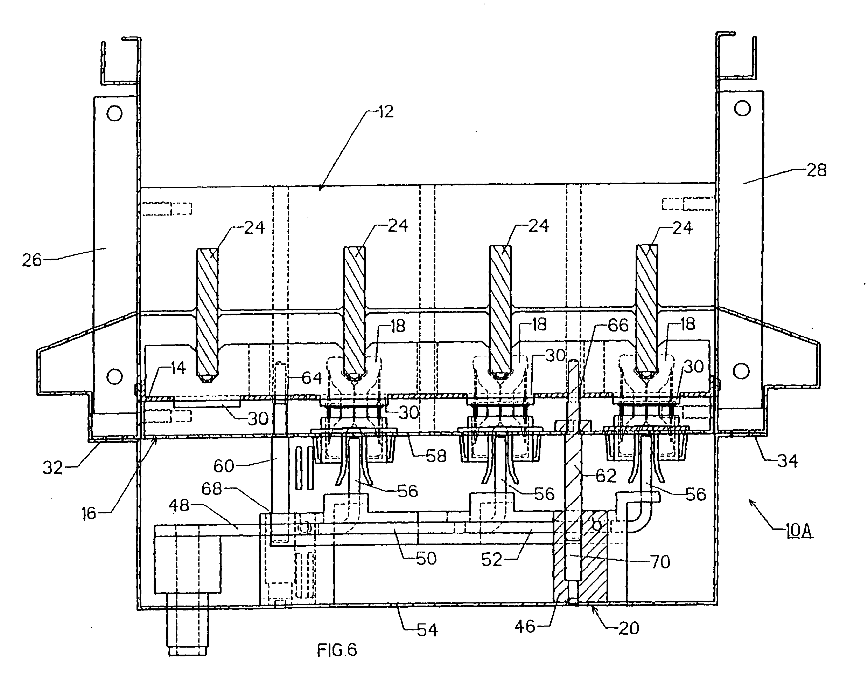

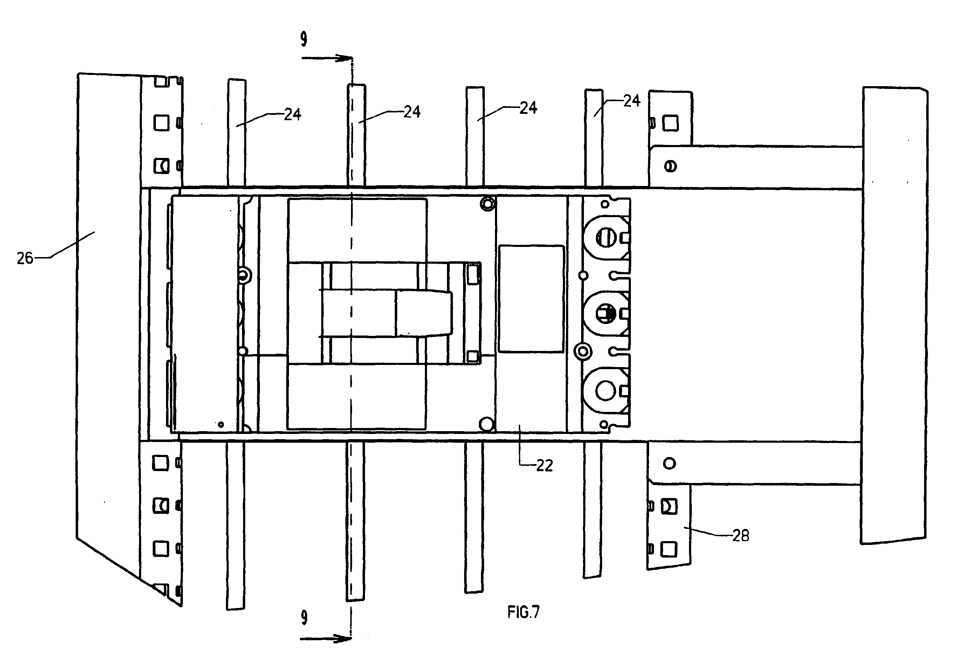

La figure 2 montre la version fixe de l'unité fonctionnelle de départ 10 A en position assemblée, dans laquelle la platine 20 est fixée à demeure avec l'appareil 22 sur les flasques 26, 28 du jeu de barres 12. Le raccordement aval s'effectue au moyen de câbles de liaison connectés aux bornes de sortie de l'appareil 22, et s'étendant dans le deuxième compartiment 38. Le raccordement amont de l'appareil 22 avec les barres 24 intervient dans le compartiment central au moyen de la platine 20 et des pinces d'embrochée 18, tel que décrit en détail par la suite en référence aux figures 6 et 7.

La figure 3 représente une version déconnectable de l'unité fonctionnelle de départ 10B, dans laquelle le démontage des vis de fixation 40 de la platine 20 permet de désolidariser la connexion amont suite au retrait vers l'avant de l'ensemble platine 20 et de l'appareil 22 associé.

La figure 4 montre une version amovible d'une unité fonctionnelle de départ 10C, dans laquelle les bornes amont de l'appareil 22 sont débrochables grâce aux pinces d'embrochage 18, et les bornes aval sont déconnectables à partir de pinces d'embrochage 42 situées sur l'interface de connexion 16, en plus des pinces d'embrochage 18. Les pinces d'embrochage sont en liaison avec les conducteurs de sortie connectés à l'installation. La platine 20 A de l'appareil 22 est dans ce cas plus large que celle 10 des versions fixe et déconnectable selon les figures 2 et 3.

La figure 5 présente une version débrochable d'une unité fonctionnelle de départ 10 D, dans laquelle la platine 20A et l'appareil 22 sont placés sur un tiroir 44 extractible autorisant le débrochage des connexions amont et aval de l'appareil 22, ainsi que celui de la filerie des auxiliaires.

Pour toutes les quatre versions des figures 2 à 5, la hauteur d'installation H reste identique, et l'encombrement à l'intérieur de la cellule est sensiblement inchangé, indépendamment de la version choisie. L'unité fonctionnelle de départ 10A en version fixe (figure 2) peut être facilement personnalisée par des références complémentaires pour obtenir successivement les autres versions des figures 3 à 5.

En référence à la figure 6, l'unité fonctionnelle de départ 10A ou 10B de la version fixe, ou de la version déconnectable est représentée en vue de dessus, après enlèvement de l'appareil 22 électrique. La platine 20 de support et de branchement de l'appareil 22 comporte un support isolant 46 renfermant trois ou quatre conducteurs d'amenée de courant 48, 50, 52 de sections rectangulaires et de longueurs différentes, connectés respectivement aux plages de contact amont de l'appareil 22. Les trois conducteurs 48, 50, 52 sont décalés l'un de l'autre dans le sens de la hauteur, et disposés dans un même plan parallèle à la face avant 54 de support de l'appareil 22. Les extrémités 56 recourbées en équerre des trois conducteurs 48, 50, 52 en cuivre sont disposées en alignement avec les barres 24 des phases correspondantes du jeu de barres 12. L'interface de connexion 16 réalise la liaison électrique entre le jeu de barres 12 à l'arrière et les extrémités 56 des conducteurs d'amenée de courant 48, 50, 52. Les pinces d'embrochage 18 sont positionnées sur une plaque 58 de l'interface de connexion 16 en s'étendant en oblique (figure 1) pour respecter le décalage et le dimensionnement des conducteurs d'amenée de courant 48, 50, 52.

L'interface de connexion 16 est équipée de pions de centrage 60, 62 traversant de part et d'autre la plaque 58 pour s'engager du côté jeu de barres 12 dans des trous 64, 66 de la grille 14. Le positionnement de l'interface de connexion 16 sur la grille 14 provoque simultanément l'insertion des pinces d'embrochage 18 sur les chants des barres 24 après avoir traversé les orifices 30. La mise en place de la platine 20 sur l'interface de connexion 16 intervient après l'engagement des mêmes pions de centrage 60, 62 dans des trous 68, 70 du support isolant 46. Les extrémités 56 des conducteurs d'amenée de courant 48, 50, 52 pénètrent dans les pinces d'embrochage 18 à l'avant de la plaque 58, suivi de la fixation des pattes 32, 34 d'assemblage sur les flasques 26, 28 du jeu de barres 12.

Le montage bilatéral des pions de centrage 60, 62 dans les trous 64, 66 de la grille 14, et dans les trous 68, 70 de la platine 20 permet d'obtenir un alignement parfait des extrémités 56 des conducteurs d'amenée de courant 48, 50, 52 avec les barres 24 en cuivre des phases correspondantes du jeu de barres 12. La connexion électrique entre le jeu de barres 12, et les bornes amont de l'appareil 22 s'effectue rapidement sans vis de serrage .

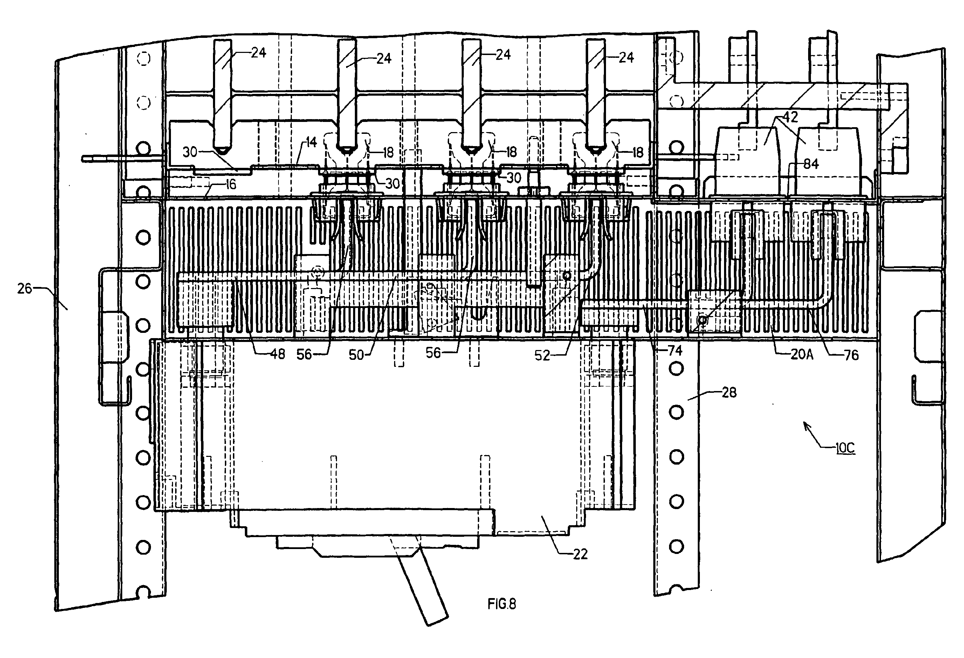

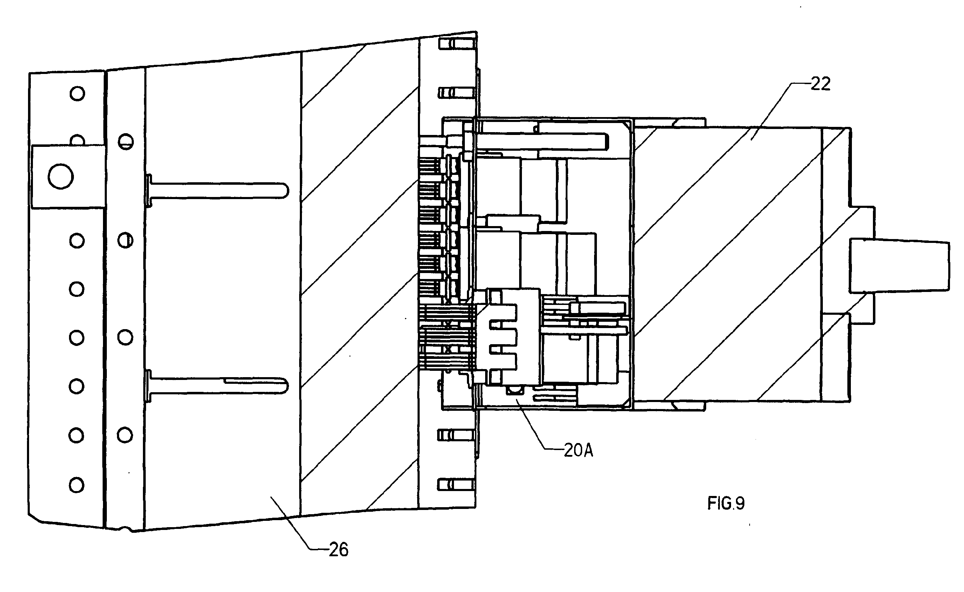

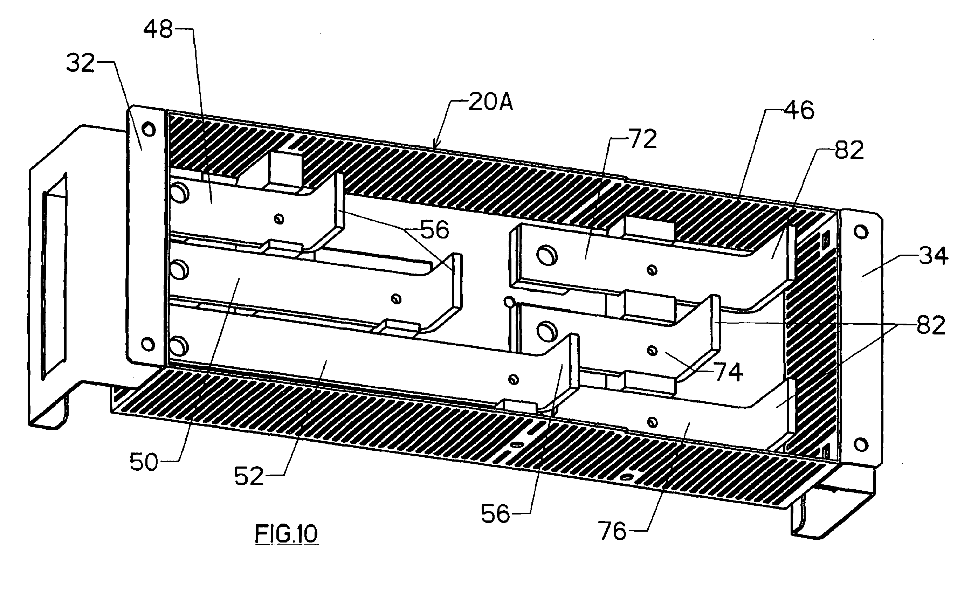

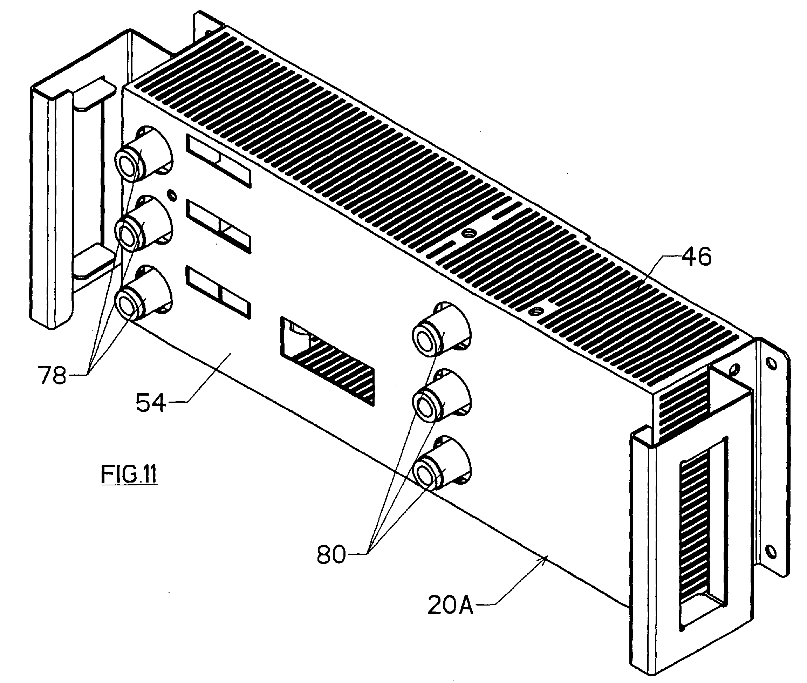

Sur les figures 7 à 11, l'unité fonctionnelle de départ 10C de la version amovible possède une connexion des bornes amont identique à celle décrite précédemment en référence à la figure 6. Les pièces de liaison par pinces d'embrochage des bornes amont portent à cet effet les mêmes numéros de référence, et ne seront plus décrites par la suite. La connexion des bornes aval de l'appareil 22 ne s'effectue plus par des câbles connectés directement aux bornes aval de l'appareil 22, mais au moyen d'une deuxième série de conducteurs de raccordement 72, 74, 76 logés dans le boîtier 46 de la platine 20A.

La platine 20A de support de l'appareil électrique 22 renferme la première série de conducteurs d'amenée de courant 48, 50, 52 alignés transversalement avec la deuxième série de conducteurs de raccordement 72, 74, 76 lesquelles sont disposées dans un même plan légèrement décalé par rapport à la direction d'embrochage des pinces 18. Des plots de raccordement 78, 80 font saillie de la face avant 54 de la platine 20A, et se trouvent en liaison électriques avec les conducteurs des deux séries. Les plots 78 et 80 sont interconnectés respectivement avec les bornes amont et les bornes aval de l'appareil 22 triphasé lorsque ce dernier est positionné sur la face avant 54 de la platine 20A.

Les extrémités 82 recourbées des conducteurs de raccordement 72, 74, 76 coopèrent avec les pinces d'embrochage 42 lorsque les autres extrémités 56 des conducteurs d'amenée de courant 48, 50, 52 pénètrent dans les pinces d'embrochage 18. Les pinces d'embrochage 42 sont portées par une extension 84 de l'interface de connexion 16.

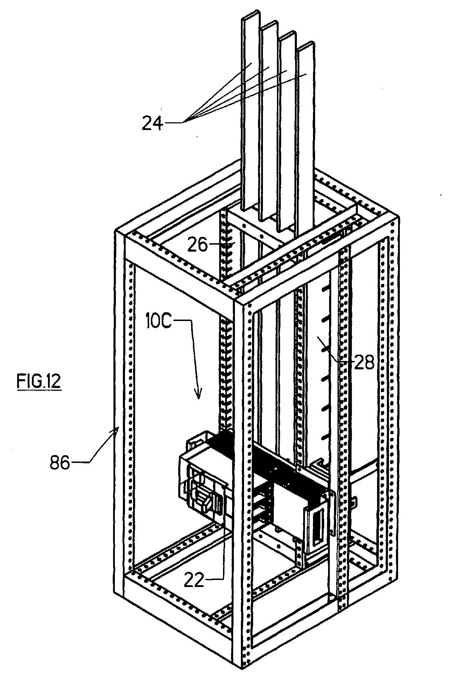

La figure 12 montre l'unité fonctionnelle de départ 10 C incorporée dans l'ossature 86 métallique de la cellule.

## Revendications

1. Unité fonctionnelle de départ d'une cellule électrique à basse tension, renfermant :
- un jeu de barres (12) vertical multipolaire comprenant des barres (24) conductrices s'étendant de chant dans des plans verticaux parallèles échelonnés le long de la direction transversale entre deux flasques (26, 28),
- une platine (20, 20A) de support et de branchement d'un appareil électrique (22),
- une grille (14) de protection positionnée à l'avant des barres (24), ladite grille étant équipée d'orifices (30),
- et des moyens de connexion électrique de la platine (20, 20A) au jeu de barres (12) comprenant un interface de connexion (16) à pinces d'embrochage (18), intercalé entre la grille (14) de protection et la platine (20, 20A), chaque pince (18) traversant un orifice (30) prédéterminé de la grille (14) pour enfourcher la barre (24) de la phase correspondante,
**caractérisée en ce que**:
- la platine (20, 20A) comporte des conducteurs d'amenée de courant (48, 50, 52) coplanaires présentant des longueurs différentes, avec un décalage en hauteur dans la direction d'extension des barres (24),
- les pinces d'embrochage (18) sont disposées en oblique sur une plaque (58) de l'interface de connexion (16), avec un décalage correspondant à l'écartement des barres (24) des différentes phases,
- et des moyens de centrage assurent le positionnement de la platine (20, 20A) sur la grille (14) de protection pour aligner les extrémités (56) des conducteurs d'amenée de courant (48, 50, 52) de la platine (20, 20A) sur les barres (24) selon une direction perpendiculaire à l'interface de connexion (16).

2. Unité fonctionnelle de départ d'une cellule électrique selon la revendication 1, **caractérisée en ce que** la mise en place de la platine (20, 20A) sur l'interface de connexion (16) provoque l'insertion des extrémités (56) des conducteurs d'amenée de courant dans lesdites pinces d'embrochage (18) à l'opposé des barres (24).

3. Unité fonctionnelle de départ d'une cellule électrique selon la revendication 1, **caractérisée en ce que** les moyens de centrage comportent au moins un pion de centrage (60, 62) solidaire de l'interface de connexion (16), et coopérant avec des trous (64, 66) de la grille (14), et des trous (68, 70) de la platine (20, 20A).

4. Unité fonctionnelle de départ d'une cellule électrique selon la revendication 3, **caractérisée en ce que** chaque pion de centrage (60, 62) est formé par une tige faisant saillie de part et d'autre de l'interface de connexion (16), en s'étendant parallèlement aux pinces d'embrochage (18).

5. Unité fonctionnelle de départ d'une cellule électrique selon la revendication 1, **caractérisée en ce que** la platine (20A) comporte une deuxième série de conducteurs de raccordement (72, 74, 76) en liaison avec les bornes aval de l'appareil (22) et coopérant avec des pinces d'embrochée (42) portées par une extension (84) de l'interface de connexion (16).

6. Unité fonctionnelle de départ d'une cellule électrique selon la revendication 5, **caractérisée en ce que** la deuxième série de conducteurs de raccordement (72, 74, 76) est agencée dans un même plan décalé de celui des conducteurs d'amenée de courant (48, 50, 52) le long de la direction d'embrochage des pinces (18).

## Claims

1. Functional feeder unit of a low-voltage electric cubicle containing:
- a vertical multipole busbar (12) comprising conducting bars (24) extending edgeways in parallel vertical planes staggered along the transverse direction between two flange-plates (26, 28),
- a mounting plate (20, 20A) for support and connection of an electric apparatus (22),
- a protective grate (14) positioned at the front of the bars (24), said grate being equipped with apertures (30),
- and connection means for electrical connection of the mounting plate (20, 20A) to the busbar (12) comprising a connection interface (16) with draw-in tulip finger contacts (18), fitted between the protective grate (14) and the mounting plate (20, 20A), each tulip finger contact (18) passing through a predetermined hole (30) in the grate (14) and then fitting astride the bar (24) of the corresponding phase,
**characterized in that**:
- the mounting plate (20, 20A) comprises coplanar current input conductors (48, 50, 52) presenting different lengths, with a heightwise offset in the extension direction of the bars (24),
- the draw-in tulip finger contacts (18) are arranged obliquely on a plate (58) of the connection interface (16) with an offset corresponding to the distance separating the bars (24) of the different phases,
- and centring means performing positioning of the mounting plate (20, 20A) on the protective grate (14) to align the ends (56) of the current input conductors (48, 50, 52) of the mounting plate (20, 20A) on the bars (24) in a direction perpendicular to the connection interface (16).

2. Functional feeder unit of an electric cubicle according to claim 1, **characterized in that** fitting of the mounting plate (20, 20A) on the connection interface (16) causes the ends (56) of the current input conductors to be inserted into said tulip finger contacts (18) opposite from the bars (24).

3. Functional feeder unit of an electric cubicle according to claim 1, **characterized in that** the centring means comprise at least one centring pin (60, 62) fixedly secured to the connection interface (16) and operating in conjunction with holes (64, 66) of the grate (14) and holes (68, 70) of the mounting plate (20, 20A).

4. Functional feeder unit of an electric cubicle according to claim 3, **characterized in that** each centring pin (60, 62) is formed by a rod salient from the connection interface (16) on each side thereof and extending in a parallel direction to the tulip finger contacts (18).

5. Functional feeder unit of an electric cubicle according to claim 1, **characterized in that** the mounting plate (20A) comprises a second series of connecting conductors (72, 74, 76) connected to the load-side terminals of the apparatus (22) and operating in conjunction with tulip finger contacts (42) supported by an extension (84) of the connection interface (16).

6. Functional feeder unit of an electric cubicle according to claim 5, **characterized in that** the second series of connecting conductors (72, 74, 76) is arranged in one and the same plane offset from that of the current input conductors (48, 50, 52) along the draw-in direction of the tulip finger contacts (18).

## Patentansprüche

1. Abgangsbaugruppe einer Niederspannungs-Schaltzelle, die
- eine mehrpolige senkrechte Sammelschienenanordnung (12) mit Leiterschienen (24), die in parallelen Vertikalebenen, in einem bestimmten relativen Querabstand zueinander, hochkant zwischen zwei Seitenwänden (26, 28) angeordnet sind,
- eine Träger- und Anschlussplatte (20, 20A) für ein elektrisches Schaltgerät (22),
- ein vor den Sammelschienen (24) angeordnetes Schutzgitter (14) mit darin ausgebildeten Öffnungen (30) sowie
- Mittel zur elektrischen Verbindung der Trägerplatte (20, 20A) mit der Sammelschienenanordnung (12) umfasst, welche Mittel eine zwischen dem Schutzgitter (14) und der Platte (20, 20A) angeordnete Verbindungsvorrichtung (16) mit Kontaktzangen (18) umfassen, wobei jede Zange (18) durch eine bestimmte Öffnung (30) im Schutzgitter (14) geführt ist, um die Schiene (24) des zugeordneten Phasenleiters zu umgreifen,
**dadurch gekennzeichnet, dass**
- die Träger- und Anschlussplatte (20, 20A) in einer Ebene liegende Stromzuführungsleiter (48, 50, 52) unterschiedlicher Länge umfasst, die in der Längsachse der Sammelschienen (24) in unterschiedlichen Höhen angeordnet sind,
- die Kontaktzangen (18) auf einer Platte (58) der Verbindungsvorrichtung (16) um ein dem Abstand zwischen den Sammelschienen (24) der einzelnen Phasen entsprechendes Maß schräg versetzt zueinander angeordnet sind,
- und dass Zentriermittel die Positionierung der Träger- und Anschlussplatte (20, 20A) auf dem Schutzgitter (14) gewährleisten, um die Enden (56) der Stromzuführungsleiter (48, 50, 52) der Platte (20, 20A) in einer senkrecht zur Verbindungsvorrichtung (16) verlaufenden Ebene in Bezug zu den Sammelschienen (24) auszurichten.

2. Abgangsbaugruppe einer Schaltzelle gemäß Anspruch 1, **dadurch gekennzeichnet, dass** die Montage der Träger- und Anschlussplatte (20, 20A) auf der Verbindungsvorrichtung (16) die Einführung der Enden (56) der Stromzuführungsleiter in die genannten Kontaktzangen (18) auf der den Sammelschienen (24) abgewandten Seite bewirkt.

3. Abgangsbaugruppe einer Schaltzelle gemäß Anspruch 1, **dadurch gekennzeichnet, dass** die Zentriermittel mindestens einen, fest mit der Verbindungsvorrichtung (16) verbundenen Zentrierstift (60, 62) umfassen, der mit Öffnungen (64, 66) im Schutzgitter (14) sowie mit Öffnungen (68, 70) in der Trägerplatte (20, 20A) zusammenwirkt.

4. Abgangsbaugruppe einer Schaltzelle gemäß Anspruch 3, **dadurch gekennzeichnet, dass** jeder Zentrierstift (60, 62) aus einer zu beiden Seiten aus der Verbindungsvorrichtung (16) herausstehenden Stange besteht, die parallel zu den Kontaktzangen (18) verläuft.

5. Abgangsbaugruppe einer Schaltzelle gemäß Anspruch 1, **dadurch gekennzeichnet, dass** die Träger- und Anschlussplatte (20A) eine zweite Gruppe von Anschlussleitern (72, 74, 76) umfasst, die mit den abgangsseitigen Klemmen des Schaltgerätes (22) verbunden sind und mit auf einer Verlängerung (84) der Verbindungsvorrichtung (16) montierten Kontaktzangen (42) zusammenwirken.

6. Abgangsbaugruppe einer Schaltzelle gemäß Anspruch 5, **dadurch gekennzeichnet, dass** die zweite Gruppe von Anschlussleitern (72, 74, 76) in einer Ebene angeordnet ist, die in Einsteckrichtung der Kontaktzangen (18) gesehen zur Ebene der Stromzuführungsleiter (48, 50, 52) versetzt ist.
